# EUROPEAN PATENT SPECIFICATION

(11) **EP 2 246 392 B1**
(45) Date of publication and mention of the grant of the patent: **22.07.2020**
(21) Application number: 10000172.6
(22) Date of filing: 11.01.2010
(51) Int. Cl.: C08L 91/00

(54) **Procedure for obtaining a styrene-ethylene-butylene-styrene and/or a styrene-propylene-butylene-styrene copolymer**
Verfahren zur Darstellung eines Styrol-Ethylen-Buthylen-Styrols und/oder eines Styrol-Propylen-Buthylen-Styrol Copolymers
Procédé de fabrication d'un copolymère de styrène-éthylène-butylène-styrène et/ou de styrène-propylène-butylène-styrène

(30) Priority: 17.04.2009 IT PD20090097
(43) Date of publication of application: 03.11.2010
(73) Proprietor: Gel Industry s.r.l., 35010 Vigonza (PD) (IT)
(72) Inventor: Radames, Rossi, 35010 Vigonza PD (IT)

(56) References cited:
- EP-A2- 1 188 815
- WO-A1-2004/046250
- US-A1- 2002 116 867

## Description

The invention concerns a particular procedure for obtaining goods made of the copolymer styrene-ethylene-butylene-styrene and/or the copolymer styrene-propylene-butylene-styrene, to obtain a hardness corresponding to a softness of a desired gel.

At present, in order to obtain polymer-based products an injection method is used, starting with the relative granule and using moulds capable of withstanding generally quite high pressures.

Examples of said product and/or methods to obtain said products are shown in US2002116867, EP1188815 and WO2004046250.

The characteristics of the products obtained are obviously related to the type of polymer granule used and to the process for obtaining said granule.

The characteristics of the products attained are those of a type of rubber with a certain hardness that cannot be compared to the softness of a gel, so they cannot be classified and used, for example, as bedsore prevention materials.

Given that for each specific type of granule the production has to be quite costly, their diversification is very limited.

As a result, also the diversification of the products obtained, because it is related to the type of granule, is very limited.

Furthermore, the variability of the forms, and in particular of the size of the products, is also limited given the high cost of the moulds needed to withstand the high injection pressures.

Also the products obtained have quite serious problems when they have to be applied to certain surfaces when not using adhesives that are valid for their application.

Of the drawbacks listed above, it should be pointed out that the products obtained are too hard to be used as bedsore prevention materials or padding for mattresses, sofas and soft cushions.

Other methods, where the SEBS and SPBS copolymers are treated in such a way that you can obtain a gel that is capable gravity filling the open moulds, however, makes products that are not hard enough for bedsore prevention use or stuffing for mattresses, sofas or soft cushions.

The aim of this patent is to inexpensively obtain gel products, by means of injection in closed moulds, with a hardness that varies between 5 and about 40 SH00 for copolymers (without the limits that previously were considered with the procedure of injection moulding using granules), namely to obtain products made of copolymer styrene-ethylene-butylene-styrene and/or the copolymer styrene-propylene-butylene-styrene having different characteristics (like softness, hardness, colour, shape, size) for small amounts.

The invention can be obtained with the following devices and chemical elements:
Copolymer styrene-ethylene-butylene-styrene with parts in weight between 10% and 30% and/or the copolymer styrene-propylene-butylene-styrene with parts by weight between 10% and 30%;
Paraffin or aromatic oil with parts by weight between 90% and 70%;
Stabilisers with parts by weight between 0.1% and 0.2% Colorants, as needed.

The method of invention for obtaining SEBS and/or SPBS compounds, is characterised by the following steps:
- insertion of a paraffin or aromatic oil (or their mixture) into a thermostatic mixer at 55-60°C with an amount by weight between 70-90%;
- the constant agitation of said paraffin or aromatic oil in said mixer;
- insertion of the following into the mixer containing the above-mentioned copolymer oil:
- SEBS and/or SPBS and/or their compounds with parts by weight between 10 and 30%;
- stabilisers with parts by weight between 0.1 and 0.2%;
- colorants as required;
- mixing everything until the liquid phase disappears;
- cooling of the mass obtained inside the mixer to a temperature between about 25° C and 40 °C and the concurrent agitation of the entire mass until it transforms into a powder state.

The method for obtaining the product to be put into the injector for being injected into the mould is described below.

The desired quantities of paraffin or aromatic oil are poured into a jacketed mixer, with fluid exchange (e.g. water) and stirrer with blades.

The heating is started, making sure on the control unit that the temperature stabilises at between 55 and 70°C.

While stirring you add the SEBS and SPBS polymers, the compounds and, still stirring and keeping the mixer at a steady temperature, you stir until the liquid phase (oil) disappears.

The temperature has to be even throughout the mixer, so as not to get premature gelling and always kept below 75-85°C.

This temperature limit is important because if premature gelling occurs a solid mass forms in the mixer with the result that it blocks.

Once the oil has been absorbed by the copolymer, you start to pass into the sleeve of the mixer a cold fluid and you then let the entire mass cool, still being stirred, until a temperature of between 25-30°C is reached.

The operation described above is important because the formulation with this hardness, which is extremely rich in oil, at a temperature around 75-80°C is so sticky that it unites the particles in a soft and elastic mass that is difficult to separate the above-mentioned particles from one another.

Once the whole mass has reached a temperature of 25-30°C, a powder forms with the desired rheological properties.

Said powder lends itself well to being transported pneumatically or mechanically, to be stored for later use and for being used immediately or very soon after.

Said powder is used by putting it into a suitable injector, inside which its plastification occurs and therefore the final injection into a closed type of mould.

To obtain the plastification of the powder:
The cylinder of the injector (with an appropriate diameter for housing a screw with a suitable profile), is heated with increasing temperatures from the entrance up to the nozzle (for example from 80 to 220°C);
The screw is made with the pitch progressively decreasing from the entrance towards the nozzle (for example from above 40 mm up to 0 mm);
After the "powder" enters along the course of the screw, during the plastification, the loading of the screw should take place in small amounts, and no backpressure, since the powder lends itself well to packing.

The rotation speed of the screw can vary according to requirements, for example, from 60-80 revs per minute (medium-low speed) for better plastification.

For injection into the mould it has to have a temperature between 15° and 40°C according to the thicknesses.

The successive cooling time at the end of the filling can range from 40 to 70 seconds.

All the other characteristics regarding the mould do not differ from the normal moulds for conventional plastics, taking into account, for example, the size and the configuration of the mould.

Injection by means of the feeder, in this methods, is the most convenient solution for the automatic extraction of the moulded piece, because the feeder provides a solid coupling point.

In the method in the patent, taking into account that the products obtained are thermoplastic rubbers for which there are no adhesive systems, for sticking said products onto their supports, on the surface of the mould /smooth part) you lay down a TNT, Jersey or the like that is impregnated by the injected gel that fills the moulds.

If you do not plan to lay down on the surface of the mould (smooth part) a TNT, Jersey or the like because it will be impregnated by the injected gel, when needed the above-mentioned fabrics can be applied later on the smooth surface of the product that is obtained, on a hot melt surface (hot plate welding)

The method in this patent is the most suitable for also limited production, lowering the costs since the production of the granule is skipped; there is the possibility of directly producing the mix of the mixer, obtaining a hardness that is optimal for comfort (chairs, mattresses, etc.) and for the bedsore prevention properties, which cannot be obtained with open moulds given the high degree of viscosity of the molten cast.

After what has just been explained, the system allows you to obtain gel with a hardness varying along the entire SH 00 scale, and to produce products for bedsore prevention use and capable of increasing the comfort of mattresses, sofas and soft cushions; as well as being markedly innovative, it is highly inventive.

One advantage is that the moulds can be made of a light alloy, given the low injection and therefore the lower cost compared to the usual steel moulds.

Another advantage is that the moulds can be quite large and for complex shapes, with optimal filling given the low viscosity of the molten liquid.

Another advantage is that the injection can occur through the biscuit.

It should be remembered that the values of the percentages of the products used as well as the values of the temperatures expressed, that the dimensions of the injector, that the number of revolutions of the screw should be understood to be by way of example only, so you can arrive at a final product with suitable variations to their parameters.

## Claims

1. Procedure for obtaining SEBS and/or SPBS compounds, **characterised by** the following steps:
- insertion of a paraffin or aromatic oil (or their mixture) into a thermostatic mixer at 55-60°C with an amount by weight between 70-90%;
- the constant agitation of said paraffin or aromatic oil in said mixer;
- insertion of the following into the mixer containing the above-mentioned copolymer oil:
- SEBS and/or SPBS and/or their compounds with parts by weight between 10 and 30%;
- stabilisers with parts by weight between 0.1 and 0.2%;
- colorants as required;
- mixing everything until the liquid phase disappears;
- cooling of the mass obtained inside the mixer to a temperature between about 25° C and 40 °C and the concurrent agitation of the entire mass until it transforms into a powder state.

2. Procedure for obtaining SEBS and/or SPBS mixes according to claim 1 **characterised by** the fact that the product obtained has the appearance of a powder that is chemically stable at room temperature and pressure.

## Patentansprüche

1. Verfahren zur Gewinnung von SEBS- und/oder SPBS-Verbindungen, das durch die folgenden Schritte gekennzeichnet ist:
- Einbringen eines Paraffins oder aromatischen Öls (oder ihrer Mischung) in einen thermostatischen Mischer bei 55-60 °C mit einer Gewichtsmenge zwischen 70 und 90 %;
- das konstante Rühren des Paraffins oder aromatischen Öls in dem Mischer;
- Einführen des Folgenden in den Mischer, der das oben erwähnte Copolymeröl enthält:
- SEBS und/oder SPBS und/oder deren Verbindungen mit Gewichtsanteilen zwischen 10 und 30 %;
- Stabilisatoren mit Gewichtsanteilen zwischen 0,1 und 0,2 %;
- Farbstoffe nach Bedarf;
- Mischen von allem, bis die flüssige Phase verschwindet;
- Abkühlen der erhaltenen Masse im Inneren des Mischers auf eine Temperatur zwischen etwa 25 °C und 40 °C und gleichzeitiges Rühren der gesamten Masse, bis sie in einen Pulverzustand übergeht.

2. Verfahren zur Herstellung von SEBS- und/oder SPBS-Mischungen nach Anspruch 1, **dadurch gekennzeichnet, dass** das erhaltene Produkt das Aussehen eines Pulvers hat, das bei Raumtemperatur und -druck chemisch stabil ist.

## Revendications

1. Procédé pour l'obtention de composés SEBS et/ou SPBS **caractérisé par** la séquence des phases suivantes:
- insertion dans un mélangeur thermostaté à 55-60° C d'une huile paraffinique et/ou aromatique (ou de leur mélange) ayant une quantité en poids comprise entre 70-90%;
- agitation constante de ladite huile paraffinique et/ou aromatique à l'intérieur dudit mélangeur;
- introduction dans le mélangeur contenant l'huile de copolymère précitée:
- de SEBS et/ou SPBS et/ou leur mélange entre 10 et 30% en poids;
- de stabilisants entre 0,1 et 0,2% en poids;
- de colorants en quantité suffisante;
- maintien de l'ensemble sous agitation constante jusqu'à la disparition de la phase liquide;
- refroidissement de la masse obtenue à l'intérieur du mélangeur jusqu'à une valeur de température comprise entre 25° C et 40° C environ et maintien concomitant de l'ensemble de la masse sous agitation jusqu'à la transformation à l'état de poudre.

2. Procédé pour l'obtention de composés à base de SEBS et/ou SPBS selon la revendication 1 **caractérisé par le fait que** le produit obtenu a l'aspect d'une poudre chimiquement stable, à température et pression ambiantes.
